# EUROPÄISCHE PATENTSCHRIFT

(11) **EP 4 299 416 B1**
(45) Veröffentlichungstag und Bekanntmachung des Hinweises auf die Patenterteilung: **22.10.2025**
(21) Anmeldenummer: 23181734.7
(22) Anmeldetag: 27.06.2023
(51) Int. Cl.: B62D 5/04, F16H 7/14

(54) **LENKGETRIEBE FÜR EIN KRAFTFAHRZEUG**
STEERING GEAR FOR A MOTOR VEHICLE
MÉCANISME DE DIRECTION POUR UN VÉHICULE AUTOMOBILE

(30) Priorität: 30.06.2022 BE 202205534
(43) Veröffentlichungstag der Anmeldung: 03.01.2024
(73) Patentinhaber: thyssenkrupp Presta Aktiengesellschaft, 9492 Eschen (LI); thyssenkrupp AG, 45143 Essen (DE)
(72) Erfinder: Raither, Wolfram, 9475 Sevelen (CH); Malacci, Luca, 8172 Niederglatt (CH)
(74) Vertreter: thyssenkrupp Intellectual Property GmbH

(56) Entgegenhaltungen:
- JP-A- 2014 231 306
- KR-A- 20120 139 972
- US-A1- 2016 200 350

## Beschreibung

### Stand der Technik

Die Erfindung betrifft ein Lenkgetriebe für ein Kraftfahrzeug, umfassend ein in einem Motorgehäuse von einem Motor um eine Motorachse drehend antreibbares erstes Getrieberad, eine in einem Getriebegehäuse um eine parallel zur Motorachse angeordnete Getriebeachse drehend gelagertes zweites Getrieberad, und ein um die Getrieberäder umlaufendes Zugmittel, wobei die Motorachse und die Getriebeachse Abstand voneinander in Richtung einer Verbindungslinie haben und an dem Motorgehäuse und dem Getriebegehäuse eine Vorspanneinrichtung angreift, die ausgebildet ist, die Getrieberäder in Richtung der Verbindungslinie voneinander weg zu drängen, wobei die Vorspanneinrichtung ein Keilelement und ein Spannelement aufweist, wobei das Keilelement in einer Keilrichtung quer zur Verbindungslinie zusammenlaufende, zur Motorachse und Getriebeachse parallele Keilflächen aufweist, die mit korrespondierenden Gegenflächen am Motorgehäuse und am Getriebegehäuse zusammenwirken, und das Spannelement ausgebildet ist, das Keilelement in der Keilrichtung zwischen die Gegenflächen zu zwängen.

In einem Kraftfahrzeug-Lenksystem wird durch das Lenkgetriebe eine Lenkkraft zur Erzeugung eines Lenkeinschlags auf die zu lenkenden Räder ausgeübt. In der gattungsgemäßen Bauform ist ein motorischer Antrieb vorgesehen, bei der durch einen elektrischen Motor die Lenkkraft erzeugt wird, und zwar vollständig bei einem Steer-by-Wire-Lenksystem, oder teilweise als Hilfskraft bei einer Hilfskraftlenkung.

Das von dem Motor bereitgestellte Motormoment wird beispielsweise über einen Spindeltrieb in eine Bewegung von Spurstangen umgesetzt, die an Achsschenkel von zu lenkenden Rädern angelenkt sind. Dabei weist ein gattungsgemäßes Lenkgetriebe ein Untersetzungsgetriebe auf, welches als Zugmittelgetriebe ausgebildet ist, d.h. als Riemen-, Zahnriemen- oder Kettengetriebe. Dieses weist als Antriebsrad ein bevorzugt auf der Motorwelle angebrachtes, um die Motorachse drehend antreibbares erstes Getrieberad auf, welches über ein umlaufendes Zugmittel getriebemäßig mit einem zweiten Getrieberad gekuppelt ist, welches um eine Getriebeachse drehbar gelagert ist und beispielsweise das Antriebsrad eines Spindeltriebs bildet.

Bei einem Zugmittelgetriebe ist die Einhaltung einer definierten Vorspannung des Zugmittels wesentlich, beispielsweise der Riemenspannung, um einen ruhigen Lauf und einen geringen Verschleiß sicherzustellen. Die Vorspannung kann als Zugspannung durch den Abstand der Getrieberäder gemessen entlang einer Verbindungslinie zwischen Motor- und Getriebeachse vorgegeben werden. Der Abstand kann mittels einer Vorspanneinrichtung eingestellt werden, welche die Getrieberäder in Richtung der Verbindungslinie so weit voneinander weg bewegt, bis das Zugmittel mit der optimalen Zugspannung vorgespannt ist.

Im Stand der Technik ist beispielsweise aus der JP 2014231306 A ein Lenkgetriebe mit einer Vorspanneinrichtung bekannt, bei welcher der Motor und das Getriebe über eine verstellbare Keilanordnung gegeneinander abgestützt sind. Diese ermöglicht zwar im Prinzip die Einstellung der Zugspannung durch eine Veränderung des Abstands zwischen Motor- und Getriebeachse, weist bedingt durch mehrere erforderliche Halte-, Stütz und Führungselemente einen relativ aufwendigen Aufbau auf. Außerdem erfolgt eine ungünstige Einleitung der Vorspannkraft im Bereich der Verbindungslinie zwischen Motor-und Getriebeachse, wodurch die konstruktive Realisierung und die Einstellung einer genauen Vorspannung erschwert wird.

Die aus der KR 20120139972 A bekannte Vorspanneinrichtung mit Exzenter ist ebenfalls aufwendig und im Hinblick auf die Einstellung.

Angesichts der vorangehend erläuterten Problematik ist es eine Aufgabe der vorliegenden Erfindung, den Aufwand zu verringern und eine verbesserte Einstellung der Vorspannung zu ermöglichen.

### Darstellung der Erfindung

Diese Aufgabe wird erfindungsgemäß gelöst durch das Lenkgetriebe mit den Merkmalen des Anspruchs 1. Vorteilhafte Weiterbildungen ergeben sich aus den Unteransprüchen.

Bei einem Lenkgetriebe für ein Kraftfahrzeug, umfassend ein in einem Motorgehäuse von einem Motor um eine Motorachse drehend antreibbares erstes Getrieberad, eine in einem Getriebegehäuse um eine parallel zur Motorachse angeordnete Getriebeachse drehend gelagertes zweites Getrieberad, und ein um die Getrieberäder umlaufendes Zugmittel, wobei die Motorachse und die Getriebeachse Abstand voneinander in Richtung einer Verbindungslinie haben und an dem Motorgehäuse und dem Getriebegehäuse eine Vorspanneinrichtung angreift, die ausgebildet ist, die Getrieberäder in Richtung der Verbindungslinie voneinander weg zu drängen, wobei die Vorspanneinrichtung ein Keilelement und ein Spannelement aufweist, wobei das Keilelement in einer Keilrichtung quer zur Verbindungslinie zusammenlaufende, zur Motorachse und Getriebeachse parallele Keilflächen aufweist, die mit korrespondierenden Gegenflächen am Motorgehäuse und am Getriebegehäuse zusammenwirken, und das Spannelement ausgebildet ist, das Keilelement in der Keilrichtung zwischen die Gegenflächen zu zwängen, ist erfindungsgemäß vorgesehen, dass das Motorgehäuse mit Abstand zur Verbindungslinie an dem Getriebegehäuse angelenkt ist.

Das erste und das zweite Getrieberad werden gemeinsam als die Getrieberäder oder die beiden Getrieberäder bezeichnet. Das erste Getrieberad wird gleichbedeutend als Antriebsrad bezeichnet, und entsprechend das zweite Getrieberad als Abtriebsrad. Das Zugmittelgetriebe kann alternativ als Riemen- bzw. Zahnriemen- oder Kettengetriebe ausgebildet sein, wobei die Riemenräder entsprechend als Riemen-, Zahnriemen- oder Kettenräder ausgebildet sind, und das Zugmittel als Riemen, Zahnriemen oder Kette. Soweit im Folgenden nicht ausdrücklich zwischen diesen genannten Ausführungen unterschieden wird, sind bei Nennung einer spezifischen Ausführung jeweils die alternativen Ausführungen mit umfasst. Der Zugmitteltrieb umfasst die Getrieberäder und das Zugmittel.

Erfindungsgemäß ist vorgesehen, dass das Motorgehäuse mit Abstand zur Verbindungslinie an dem Getriebegehäuse angelenkt ist. Auf der dem Keilelement bezüglich der Verbindungslinie gegenüberliegenden Seite sind Motor- und Getriebegehäuse relativ zueinander um eine zur Motor- bzw. Getriebeachse parallele Gelenkachse gelenkig schwenkbar miteinander verbunden. Durch Verstellen des Keilelements wird ein relatives Auseinanderschwenken um die Schwenkachse bewirkt, so dass der Abstand von Motor- und Getriebeachse in Richtung der Verbindungslinie zur Erhöhung der Zugspannung vergrößert werden kann. Es wird ein einarmiger Hebel gebildet, bei dem die effektive Hebellänge zur Einleitung der durch das Keilelement ausgeübten Kraft mit dem Abstand der Keilflächen von der Verbindungslinie korreliert ist. Die effektive Länge des ausgangsseitigen Hebels, der für die relative Verlagerung von Motor- und Getriebeachse relevant ist, entspricht dabei dem Abstand des Widerlagers von der Verbindungslinie. Auf diese Weise kann durch Gestaltung der Abstände eine Kraft- und Wegübersetzung bezüglich der Betätigung der Vorspanneinrichtung realisiert werden. Dies ermöglicht eine feinfühlige und präzise Einstellung der Vorspannkraft mit geringem Aufwand.

Die gelenkige Verbindung zwischen Motorgehäuse und Getriebegehäuse, welche die relative Verlagerung von Motorachse und Getriebeachse ermöglicht, kann durch eine scharnierartige Verbindung gebildet sein, beispielsweise durch einen Gelenkbolzen oder ein vergleichbares Scharnierelement. Es ist auch denkbar, eine Art Biegescharnier vorzusehen, bei dem die Verbindung zwischen Motor- und Getriebegehäuse biegbar ausgestaltet ist, wobei eine Verstellung durch das Keilelement eine mehr oder weniger starke Durchbiegung bewirkt.

Das Antriebsrad ist in dem Motorgehäuse gelagert, und das Abtriebsrad in dem Getriebegehäuse. Dabei kann es mit Vorteil vorgesehen sein, dass die beiden Getrieberäder über ihren Umfang zumindest abschnittweise von äußeren Gehäusewandungen des Motor- und Getriebegehäuses umschlossen sind. Das umlaufende Zugmittel kann bevorzugt ebenfalls zumindest über Teilabschnitte, bevorzugt über den überwiegenden oder vollständigen Verlauf der zwischen den Getrieberädern frei liegenden Zugmitteltrume innerhalb von Motor und Getriebegehäuse untergebracht sein. Mit anderen Worten ist es bevorzugt möglich, den gesamten Zugmitteltrieb innerhalb des von den äußeren Gehäusewandungen von Motor- und Getriebegehäuse umschlossenen Gehäuseinnenraums anzuordnen. Dadurch ist das Zugmittelgetriebe sicher gegen äußere Einflüsse, Verunreinigungen und dergleichen geschützt.

Das Motor- und Getriebegehäuse weisen in einer Trennebene, in der sie aneinander angrenzen, die einander in Richtung der Verbindungslinie zwischen Motor- und Getriebeachse gegenüberliegenden Gegenflächen auf, die quer zur Verbindungslinie, definitionsgemäß nach innen gerichtet, d.h. auf die Trennlinie zu, unter einem Keilwinkel keilförmig zusammenlaufen. Das erfindungsgemäße Keilelement läuft bevorzugt mit demselben Keilwinkel zusammen und ist so angepasst, dass es von außen formschlüssig zwischen die Gegenflächen eingesetzt werden kann. Dabei ist es vorteilhaft, dass die Keilflächen flächenhaft gleichmäßig durchgehend gegen die Gegenflächen anliegen. Je weiter das Keilelement mittels des Spannelements nach innen, quer auf die Verbindunglinie zu, zwischen die Gegenflächen getrieben wird, zwängt es die Gegenflächen in Richtung der Verbindungslinie auseinander, so dass Motor- und Getriebegehäuse und dadurch auch die beiden Getrieberäder voneinander weg bewegt werden, d.h. in Richtung der Verbindungslinie auseinander bewegt werden. Mittels des Spannelements kann das Keilelement positioniert werden, bis die optimale Zugspannung eingestellt ist.

Dadurch, dass die erfindungsgemäße Verstelleinrichtung ausgebildet ist, Motor- und Getriebegehäuse zur Einstellung der Vorspannung relativ zueinander zu positionieren, kann eine einfache konstruktive Anpassung erfolgen. Insbesondere können die Keil- und Gegenflächen im Hinblick auf optimale Verstellwirkung, gute Zugänglichkeit, einfachen Aufbau und einfache Montage optimiert werden. Darüber hinaus kann durch das Motor- und Getriebegehäuse zusammen mit dem Keilelement ein größtenteils oder vollständig geschlossener Gehäuseinnenraum, kurz Innenraum, gebildet sein, in dem der Zugmitteltrieb geschützt untergebracht ist.

Die Keilflächen können plan ausgebildet sein. Alternativ können sie ballig ausgebildet sein.

Eine vorteilhafte Ausführung kann dadurch realisiert sein, dass das Keilelement mit Abstand zur Verbindungslinie von außen an dem Motorgehäuse und dem Getriebegehäuse angreift. Dabei haben die Keilflächen und die Gegenflächen quer zur Verbindungslinie Abstand von der Verbindungslinie zwischen Motorachse und Getriebeachse. Besonders vorteilhaft ist es, dass die Gegenflächen an äußeren Umfangsabschnitten des Gehäuses ausgebildet sind, welche den Zugmitteltrieb über seinen Außenumfang zumindest abschnittweise um- oder einschließen, beispielsweise radial außerhalb der Getrieberäder angeordnet sind, oder bezüglich der Verbindungslinie außerhalb eines Zugmitteltrums. Dadurch ist es möglich, dass Keilelement zur Montage einfach von außen zwischen die Gegenflächen einzusetzen. Zur Aufbringung der Vorspannung können das oder die Spannelemente ebenfalls von außen zugänglich angeordnet sein. Auf diese Weise kann der Aufwand für die Montage und die Einstellung der Vorspannung reduziert werden.

Eine vorteilhafte Ausgestaltung kann vorsehen, dass das Keilelement außerhalb des Zugmittels angeordnet ist. Das umlaufende Zugmittel begrenzt durch seinen Verlauf über die Umschlingung der Getrieberäder und die dazwischen frei liegenden Zugmitteltrume im Wesentlichen den Zugmitteltrieb. Umfangsabschnitte von Motor- und Getriebegehäuse können den äußeren Verlauf folgend das Zugmittel zumindest abschnittweise umschließen. Die Keil- und Gegenflächen der erfindungsgemäßen Vorspanneinrichtung können bevorzugt in einem derartigen Umfangsabschnitt angeordnet sein. Dadurch wird eine günstige Krafteinleitung ermöglicht, wobei durch den Abstand zur Verbindungslinie eine Hebelwirkung realisiert werden kann.

Eine vorteilhafte Weiterbildung ist, dass die Gegenflächen an außen an dem Motorgehäuse und dem Getriebegehäuse vorstehenden Stützvorsprüngen ausgebildet sind. Die Stützvorsprünge können flansch- oder konsolenartig am Motor- und Getriebegehäuse ausgebildet sein, und weisen auf ihren einander gegenüberliegenden Seiten die Gegenflächen auf. Dadurch können relativ große Keil- und Gegenflächen unabhängig von der Wandungsdicke von Motor- und Getriebegehäuse realisiert werden, so dass ein ausreichender Einstellweg und eine vorteilhaft leichte Bauweise ermöglicht wird. Darüber hinaus ist es vorteilhaft, dass der Abstand der Keil- und Gegenflächen von der Verbindungslinie vergrößert werden kann, um die vorangehend beschriebene Hebelwirkung zur Aufbringung der Vorspannkraft zu optimieren.

Es kann vorgesehen sein, dass die Stützvorsprünge einstückig angeformt sind. Das Motorgehäuse und/oder das Getriebegehäuse können beispielsweise als Gussteile ausgebildet sein, beispielsweise als metallische Druckgussteile aus Aluminium- oder Magnesiumlegierungen oder dergleichen, oder als Kunststoff-Spritzgussteile aus einem thermoplastischen Elastomer, welches bevorzugt faserverstärkt sein kann. Die Stützvorsprünge können ohne zusätzlichen Fertigungsaufwand einstückig integriert sein, wodurch eine optimierte Konstruktion und eine rationelle Fertigung ermöglicht wird.

Es ist möglich, dass das Spannelement als Spannschraube oder Niet ausgebildet ist. Das Spannelement ist ausgebildet, um das Keilelement in Keilrichtung zwischen den Gegenflächen zu positionieren, um die geforderte Vorspannkraft einstellen und dauerhaft aufrecht erhalten zu können. Es ist vorteilhaft, eine Spannschraube vorzusehen, die das Keilelement in Keilrichtung durchsetzt und in dieser Richtung einschraubbar ist, um das Keilelement zwischen die Gegenflächen zu zwängen. Die Vorspannung kann einfach durch Einschrauben eingestellt werden. Alternativ ist es denkbar und möglich, als Spannelement einen Niet oder dergleichen vorzusehen, durch den das Keilelement ebenfalls in einer eingestellten Vorspannposition dauerhaft fixiert werden kann.

Bevorzugt kann vorgesehen sein, dass mindestens ein Spannelement mit dem Motorgehäuse oder dem Getriebegehäuse verbunden ist. Das Spannelement kann bevorzugt unmittelbar mit dem Motor- oder Getriebegehäuse verbunden sein, insbesondere ohne zwischengeschaltete Verbindungs-, Halte- oder Stützelemente. Beispielsweise kann eine Spannschraube in eine in dem Motor- oder Getriebegehäuse ausgebildete Gewindebohrung eingeschraubt sein. Vorteile sind eine kompakte Konstruktion und ein geringer Fertigungs- und Montageaufwand.

Eine bevorzugte Ausführung sieht vor, dass die Keilflächen des Keilelements einen Keilwinkel zwischen 5° und 25° einschließen. Der Vorteil dabei ist, dass eine ausreichend große Kraftübersetzung bereitgestellt wird, so dass eine relativ kleine Einstellkraft erforderlich ist, um das Keilelement zwischen die Gegenflächen zu zwängen, um eine ausreichend große Vorspannkraft zwischen den Getrieberädern zu erzeugen. Ein weiterer Vorteil ist, dass das relativ flache Keilelement selbsthemmend in seiner eingestellten Position gesichert ist, und nicht durch die rückwirkende Vorspannkraft verstellt werden kann.

Es ist vorteilhaft, dass eine der Keilflächen senkrecht zur Verbindungslinie steht. Entsprechend steht die korrespondierende Gegenfläche ebenfalls senkrecht zur Verbindungslinie, so dass die darauf von dem Keilelement in Normalenrichtung ausgeübte Vorspannkraft in Richtung der Verbindungslinie weist, wodurch die Vorspannkraft optimal wirken kann.

Es ist möglich, dass das Keilelement eine langgestreckte Keilleiste aufweist. Die Keilleiste ist quer zur Keilrichtung langgestreckt parallel zur Motor- und Getriebeachse ausgebildet. Dadurch kann eine verbesserte Abstützung gegen die korrespondierenden Gegenflächen über eine relativ große Stützlänge erzeugt werden. Auf diese Weise kann eine vorteilhaft hohe Steifigkeit realisiert werden.

Vorteilhafte Ausführungen können vorsehen, dass das Keilelement einen Kunststoff oder einen metallischen Werkstoff aufweist. Dadurch, dass das Keilelement zumindest im Bereich seiner Keilflächen ein von dem Motor- und Getriebegehäuse unterschiedliches Material aufweist, kann eine funktional günstige Materialpaarung realisiert sein. Die Gegenflächen am Motor- und Getriebegehäuse können beispielsweise metallische Oberflächen eines Gussmaterials aufweisen, und die Keilflächen können einen Kunststoff, ein Buntmetall oder dergleichen aufweisen. Dadurch kann eine relativ geringe Reibung der Keilflächen realisiert sein, wodurch eine leichte und präzise Einstellbarkeit der Vorspannkraft begünstigt wird.

Vorzugsweise können die Getrieberäder als Riemenräder, Zahnriemenräder oder Kettenräder ausgebildet sein und das Zugmittel korrespondierend als Riemen, Zahnriemen oder Kette.

Es kann vorgesehen sein, dass ein Getrieberad mit einer Spindelmutter verbunden ist, in die eine in Richtung der Getriebeachse verlagerbare Gewindespindel eingreift. Es wird ein Spindeltrieb, realisiert, bei dem die Spindelmutter um die Spindelachse drehend antreibbar, in Richtung der Getriebeachse fest abgestützt in dem Getriebegehäuse gelagert ist. Die bezüglich Drehung um ihre Spindelachse fixierte Gewindespindel kann durch einen drehenden Antrieb der Spindelmutter linear in Richtung der Spindelachse verlagert werden. Die lineare Bewegung wird zur Erzeugung eines Lenkeinschlags über Spurstangen auf Achsschenkel von zu lenkenden Rädern übertragen.

Das Lenkgetriebe kann als Steer-by-Wire-Lenkungsantrieb ausgebildet sein. Bei einem derartigen Steer-by-Wire-Lenkgetriebe wird die gesamte Stellkraft zur Erzeugung eines Lenkeinschlags der zu lenkenden Räder durch einen elektrischen Motor erzeugt, der in dem Motorgehäuse angebracht ist, und dessen Motorwelle - vorzugsweise direkt - mit dem Antriebsrad gekuppelt ist. Das Abtriebsrad ist eingangsseitig an einem in dem Getriebegehäuse untergebrachten Getriebe angebracht, welches die Drehung des über den Zugmitteltrieb angetriebenen Abtriebsrads in einen Lenkeinschlag umsetzt, beispielsweise wie vorangehend beschrieben über einen Spindeltrieb.

### Beschreibung der Zeichnungen

Vorteilhafte Ausführungsformen der Erfindung werden im Folgenden anhand der Zeichnungen näher erläutert. Im Einzelnen zeigen:
- Figur 1: ein erfindungsgemäßes Lenkgetriebe in einer schematischen perspektivischen Ansicht,
- Figur 2: eine vergrößerte Detailansicht von Figur 1,
- Figur 3: das Lenkgetriebe gemäß Figur 1 in einer weiteren, teilweise schematisch auseinandergezogenen Darstellung,
- Figur 4: eine vergrößerte Detailansicht von Figur 3,
- Figur 5: eine Seitenansicht des Lenkgetriebes gemäß Figur 1,
- Figur 6: eine Schnittdarstellung A-A aus Figur 5,
- Figur 7: eine Schnittdarstellung wie in Figur 6 in einer teilweise auseinander gezogenen schematischen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

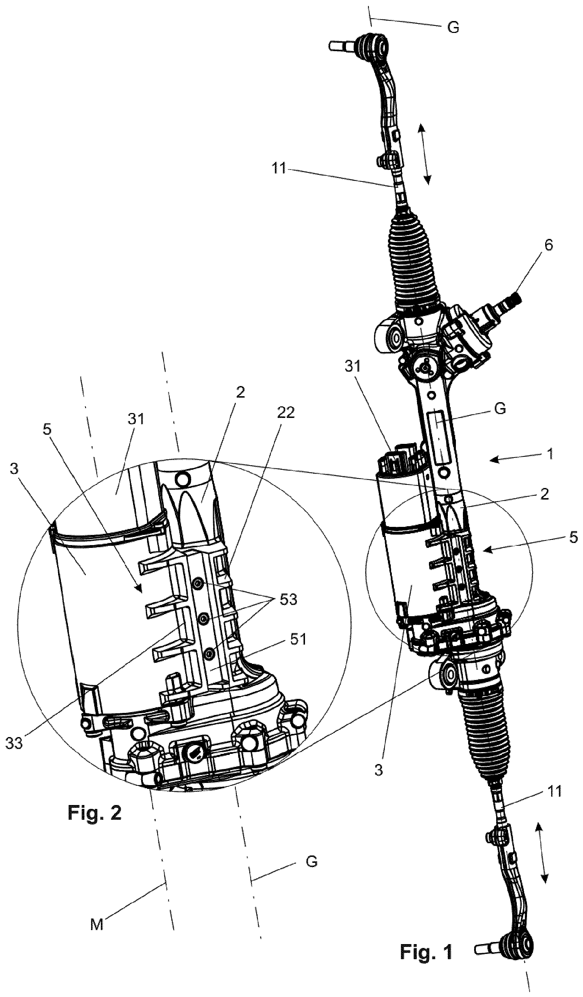

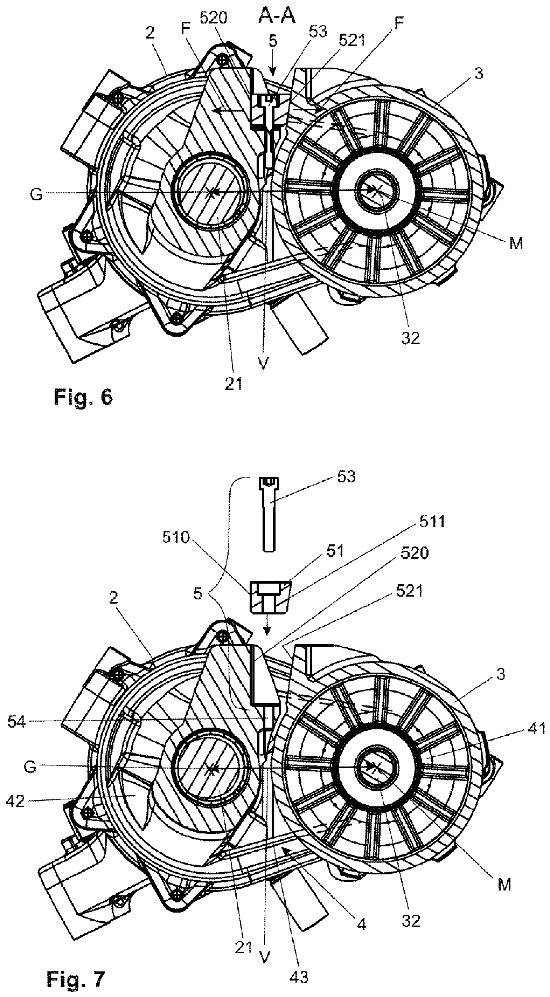

Figuren 1 bis 7 zeigen unterschiedliche Darstellungen eines erfindungsgemäßen Lenkgetriebes 1, welches als Steer-by-Wire-Lenkgetriebe oder zum Einsatz in einer Hilfskraftlenkung ausgebildet sein kann. Dieses umfasst ein Getriebegehäuse 2 und ein damit verbundenes Motorgehäuse 3. Mit dem Motorgehäuse 3 ist ein elektrischer Motor 31 verbunden, der eine in Richtung einer Motorachse M liegende Motorwelle 32 aufweist (siehe Figuren 6 und 7).

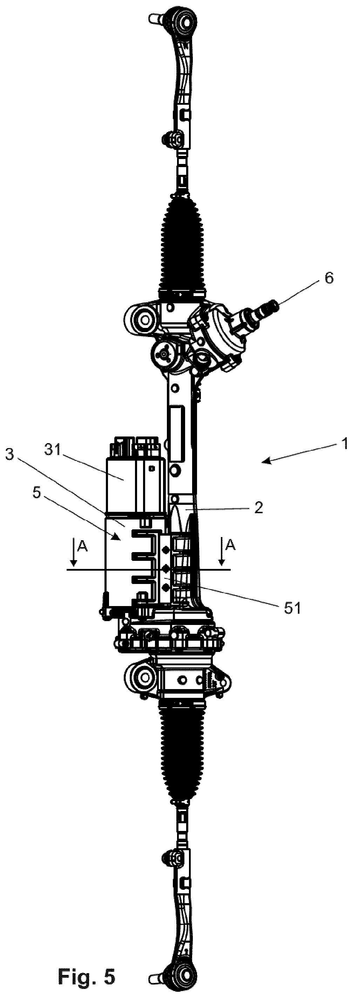

In dem Getriebegehäuse 2 ist ein an sich bekannter, hier im Einzelnen nicht dargestellter Spindeltrieb untergebracht. Dieser weist eine in Längsrichtung einer Getriebeachse G in dem Getriebegehäuse 2 linear verlagerbare Gewindespindel 21 auf, wie in dem in Figuren 6 und 7 gezeigten Schnitt A-A aus Figur 5 entnehmbar ist. Die Gewindespindel 21 ist mit Spurstangen 11 verbunden, die an hier nicht dargestellte Achsschenkel von lenkbaren Rädern eines Fahrzeugs angelenkt sind. Dadurch können die Spurstangen 11 zur Erzeugung eines Lenkeinschlags in Längsrichtung bewegt werden, wie mit den Doppelpfeilen angedeutet ist.

Die Getriebeachse G verläuft parallel zur Motorachse M.

Der Spindeltrieb weist weiterhin eine (nicht dargestellte) Spindelmutter auf, die in dem Getriebegehäuse 3 in Richtung der Getriebeachse G feststehend, um die Getriebeachse G drehbar gelagert ist.

Die Spindelmutter ist von dem Motor 31 um die Getriebeachse G drehend antreibbar. Hierzu ist ein Zugmitteltrieb vorgesehen, der hier beispielhaft als Zahnriementrieb 4 ausgebildet ist und gebildet wird aus einem auf der Motorwelle 32 fixierten ersten Zahnriemenrad 41 (Antriebsrad), einem mit der Spindelmutter verbundenen zweiten Zahnriemenrad 42 (Abtriebsrad) und einem um die beiden Zahnriemenräder 41, 42 umlaufenden, als Zahnriemen 43 ausgebildeten Zugmittel.

Die Motorachse M und die Getriebeachse G haben einen Abstand voneinander, welcher der Länge einer Verbindungslinie V entspricht (siehe Figuren 6 und 7).

Zwischen dem Getriebegehäuse 2 und dem Motorgehäuse 3 ist eine erfindungsgemäße Vorspanneinrichtung 5 wirkungsmäßig angeordnet. Diese umfasst ein Keilelement 51, welches Keilflächen 510 und 511 aufweist. Diese erstrecken sich parallel zur Motorachse M bzw. zur Getriebeachse G und laufen nach innen, quer auf die Verbindungslinie V gerichtet, keilförmig zusammen.

An dem Getriebegehäuse 2 ist eine mit der Keilfläche 510 korrespondierende Gegenfläche 520 ausgebildet, und an dem Motorgehäuse 3 eine mit der Keilfläche korrespondierende Gegenfläche 521. Die Gegenflächen 520 und 521 schließen denselben Keilwinkel ein wie die Keilflächen 510 und 511.

Ein als Schraube 53 ausgebildetes Spannmittel durchsetzt das Keilelement 52 quer zur Verbindungslinie V und ist in eine in dem Getriebegehäuse 2 ausgebildete Gewindebohrung 54 einschraubbar.

Wie in Figur 7 mit dem Pfeil angedeutet wird das Keilelement 51 von außen eingesetzt, wobei die Keilflächen 510, 511 gegen die korrespondierenden Gegenflächen 520, 521 zur Anlage kommen. Durch Festziehen der Schraube 53 in dem montierten Zustand gemäß Figur 6 wird das Keilelement 51 zwischen die Gegenflächen 520 und 521 gezwängt, und auf diese wird durch die Keilwirkung eine Kraft F ausgeübt. Die Kraft F wirkt als Vorspannkraft und drängt das Getriebegehäuse 2 und das Motorgehäuse 3 in Richtung der Verbindungslinie V voneinander weg. Durch die damit einhergehende Vergrößerung des Abstands zwischen den beiden Zahnriemenrädern 41 und 42 kann die Vorspannung des Zahnriemens 43 erhöht und auf den geforderten Wert eingestellt werden.

Die Keilfläche 510 und die korrespondierende Gegenfläche 520 können wie gezeigt senkrecht zur Verbindungslinie V stehen.

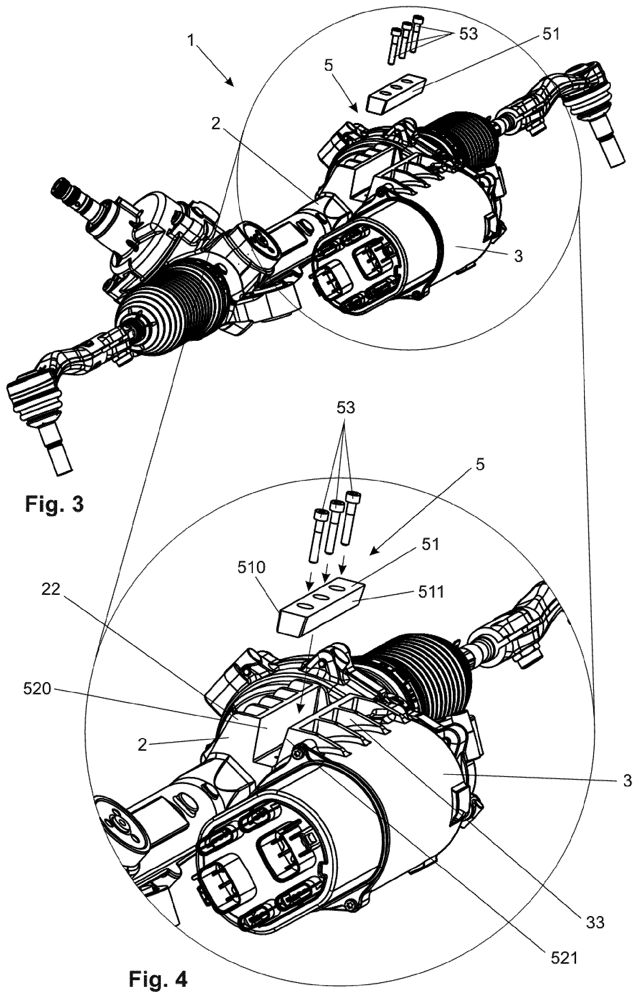

Die Gegenflächen 520 und 521 können an konsolenartig nach außen vorstehenden Vorsprüngen 22 (am Getriebegehäuse 2) und 33 (am Motorgehäuse 3) ausgebildet sein. Dadurch wird eine bessere Zugänglichkeit zur Montage ermöglicht, wie in den Darstellungen von Figur 3 und 4 erkennbar ist, die schematisch das Einsetzen des Keilelements 51 und der Schrauben 53 zeigen. Außerdem wird durch den vergrößerten Abstand zur Verbindungslinie die Hebelwirkung der Krafteinleitung verbessert.

In dem gezeigten Beispiel ist das Keilelement 51 als langgestreckte Keilleiste ausgebildet, die sich parallel zur Motorachse M und Getriebeachse G erstreckt. Dadurch kann eine hohe Steifigkeit realisiert werden. Dies kann dadurch unterstützt werden, dass wie gezeigt eine Mehrzahl von Schrauben 53 vorgesehen sind, die längs über die Keilleiste verteilt angeordnet sind.

Bevorzugt kann vorgesehen sein, dass der Zahnriementrieb 4 von dem Getriebegehäuse 2 und dem Motorgehäuse 3 umschlossen bzw. eingeschlossen ist. Das erfindungsgemäß von außen eingesetzte Keilelement 51 ermöglicht eine geschützte Unterbringung des Zahnriementriebs 4 und eine montagefreundliche und zur Aufbringung der Vorspannung gut zugängliche Vorspanneinrichtung 5.

Das Getriebegehäuse 2 und das Motorgehäuse 3 können als Gussbauteile ausgebildet sein, beispielsweise im Metall-Druckguss aus Aluminium- oder Magnesiumlegierungen oder dergleichen, oder auch als Kunststoff-Spritzgussteile, beispielsweise aus einem faserverstärkten thermoplastischen Polymer.

Optional kann das Lenkgetriebe 1 einen Getriebeeingang für eine Lenkwelle 6 aufweisen, die wie von Zahnstangenlenkungen an sich bekannt, ein Lenkritzel aufweisen kann, welches in eine Zahnstange eingreift, die mit der Gewindespindel 21 verbunden ist. In einem reinen Steer-by-Wire-Lenkgetriebe kann diese Lenkwelle 6 wegfallen, und die Lenkkraft wird ausschließlich motorisch durch den Motor 31 erzeugt.

### Bezugszeichenliste

- 1: Lenkgetriebe
- 11: Spurstange
- 2: Getriebegehäuse
- 21: Gewindespindel
- 22: Vorsprung
- 3: Motorgehäuse
- 31: Motor
- 32: Motorwelle
- 33: Vorsprung
- 4: Zahnriementrieb
- 41: Zahnriemenrad (Antriebsrad)
- 42: Zahnriemenrad (Abtriebsrad)
- 43: Zahnriemen
- 5: Vorspanneinrichtung
- 51: Keilelement
- 510: Keilfläche
- 511: Keilfläche
- 520: Gegenfläche
- 521: Gegenfläche
- 53: Schraube
- 6: Lenkwelle

- M: Motorachse
- G: Getriebeachse
- V: Verbindunglinie
- F: Kraft

## Patentansprüche

1. Lenkgetriebe (1) für ein Kraftfahrzeug, umfassend ein in einem Motorgehäuse (3) von einem Motor (31) um eine Motorachse (M) drehend antreibbares erstes Getrieberad (41), eine in einem Getriebegehäuse (3) um eine parallel zur Motorachse (M) angeordnete Getriebeachse (G) drehend gelagertes zweites Getrieberad (42), und ein um die Getrieberäder (41, 42) umlaufendes Zugmittel (43), wobei die Motorachse (M) und die Getriebeachse (G) Abstand voneinander in Richtung einer Verbindungslinie (V) haben und an dem Motorgehäuse (3) und dem Getriebegehäuse (2) eine Vorspanneinrichtung (5) angreift, die ausgebildet ist, die Getrieberäder (41, 42) in Richtung der Verbindungslinie (V) voneinander weg zu drängen,
wobei die Vorspanneinrichtung (5) ein Keilelement (51) und ein Spannelement (53) aufweist, wobei das Keilelement (51) in einer Keilrichtung quer zur Verbindungslinie (V) zusammenlaufende, zur Motorachse (G) und Getriebeachse (G) parallele Keilflächen (510, 511) aufweist, die mit korrespondierenden Gegenflächen (520, 521) am Motorgehäuse (3) und am Getriebegehäuse (2) zusammenwirken, und das Spannelement (53) ausgebildet ist, das Keilelement (51) in der Keilrichtung zwischen die Gegenflächen (520, 521) zu zwängen,
**dadurch gekennzeichnet,**
**dass** das Motorgehäuse (3) mit Abstand zur Verbindungslinie (V) an dem Getriebegehäuse (2) angelenkt ist.

2. Lenkgetriebe nach Anspruch 1, **dadurch gekennzeichnet, dass** das Keilelement (51) mit Abstand zur Verbindungslinie (V) von außen an dem Motorgehäuse (3) und dem Getriebegehäuse (2) angreift.

3. Lenkgetriebe nach einem der vorangehenden Ansprüche, **dadurch gekennzeichnet, dass** das Keilelement (51) außerhalb des Zugmittels (43) angeordnet ist.

4. Lenkgetriebe nach einem der vorangehenden Ansprüche, **dadurch gekennzeichnet, dass** die Gegenflächen (520, 521) an außen an dem Motorgehäuse (3) und dem Getriebegehäuse (3) vorstehenden Stützvorsprüngen (22, 33) ausgebildet sind.

5. Lenkgetriebe nach Anspruch 4, **dadurch gekennzeichnet, dass** die Stützvorsprünge (22, 33) einstückig angeformt sind.

6. Lenkgetriebe nach einem der vorangehenden Ansprüche, **dadurch gekennzeichnet, dass** mindestens ein Spannelement (53) mit dem Motorgehäuse (3) oder dem Getriebegehäuse (2) verbunden ist.

7. Lenkgetriebe nach Anspruch 6, **dadurch gekennzeichnet, dass** das Spannelement (53) als Spannschraube oder Niet ausgebildet ist.

8. Lenkgetriebe nach einem der vorangehenden Ansprüche, **dadurch gekennzeichnet, dass** die Keilflächen (510, 511) des Keilelements (51) einen Keilwinkel zwischen 5° und 25° einschließen.

9. Lenkgetriebe nach einem der vorangehenden Ansprüche, **dadurch gekennzeichnet, dass** eine der Keilflächen (510, 511) senkrecht zur Verbindungslinie (V) steht.

10. Lenkgetriebe nach einem der vorangehenden Ansprüche, **dadurch gekennzeichnet, dass** das Keilelement (51) eine langgestreckte Keilleiste aufweist.

11. Lenkgetriebe nach einem der vorangehenden Ansprüche, **dadurch gekennzeichnet, dass** das Keilelement (51) einen Kunststoff oder einen metallischen Werkstoff aufweist.

12. Lenkgetriebe nach einem der vorangehenden Ansprüche, **dadurch gekennzeichnet, dass** die Getrieberäder (41, 42) als Riemenräder, Zahnriemenräder oder Kettenräder ausgebildet sind, und das Zugmittel (43) korrespondierend als Riemen, Zahnriemen oder Kette ausgebildet ist.

13. Lenkgetriebe nach einem der vorangehenden Ansprüche, **dadurch gekennzeichnet, dass** ein Getrieberad (42) mit einer Spindelmutter verbunden ist, in die eine in Richtung der Getriebeachse (G) verlagerbare Gewindespindel (21) eingreift.

14. Lenkgetriebe nach einem der vorangehenden Ansprüche, **dadurch gekennzeichnet, dass** das Lenkgetriebe (1) als Steer-by-Wire-Lenkungsantrieb ausgebildet ist.

## Claims

1. Steering gear (1) for a motor vehicle, comprising a first gear wheel (41) which can be driven in an engine housing (3) by an engine (31) in rotation about an engine axis (M), a second gear wheel (42) mounted in a gear housing (3) in rotation about a gear axis (G) arranged parallel to the engine axis (M), and a traction means (43) rotating about the gear wheels (41, 42), the motor axis (M) and the transmission axis (G) being at a distance from one another in the direction of a connecting line (V), and a pretensioning device (5) engaging on the motor housing (3) and the transmission housing (2), which is designed to urge the transmission gears (41, 42) away from one another in the direction of the connecting line (V),
wherein the pretensioning device (5) has a wedge element (51) and a tensioning element (53), wherein the wedge element (51) has wedge surfaces (510, 511) which converge in a wedge direction transversely to the connecting line (V) and are parallel to the engine axis (G) and transmission axis (G), which wedge surfaces (510, 511), which cooperate with corresponding mating surfaces (520, 521) on the motor housing (3) and on the transmission housing (2), and the clamping element (53) is designed to force the wedge element (51) between the mating surfaces (520, 521) in the wedge direction,
**characterized in**
**in that** the motor housing (3) is articulated to the transmission housing (2) at a distance from the connecting line (V).

2. Steering gear according to claim 1, **characterized in that** the wedge element (51) engages the motor housing (3) and the gearbox housing (2) from the outside at a distance from the connecting line (V).

3. Steering gear according to one of the preceding claims, **characterized in that** the wedge element (51) is arranged outside the traction means (43).

4. Steering gear according to one of the preceding claims, **characterized in that** the mating surfaces (520, 521) are formed on support projections (22, 33) projecting on the outside of the motor housing (3) and the gearbox housing (3).

5. Steering gear according to claim 4, **characterized in that** the supporting projections (22, 33) are integrally formed.

6. Steering gear according to one of the preceding claims, **characterized in that** at least one clamping element (53) is connected to the motor housing (3) or the transmission housing (2).

7. Steering gear according to claim 6, **characterized in that** the clamping element (53) is designed as a clamping screw or rivet.

8. Steering gear according to one of the preceding claims, **characterized in that** the wedge surfaces (510, 511) of the wedge element (51) enclose a wedge angle of between 5° and 25°.

9. Steering gear according to one of the preceding claims, **characterized in that** one of the wedge surfaces (510, 511) is perpendicular to the connecting line (V).

10. Steering gear according to one of the preceding claims, **characterized in that** the wedge element (51) has an elongated wedge strip.

11. Steering gear according to one of the preceding claims, **characterized in that** the wedge element (51) comprises a plastic or a metallic material.

12. Steering gear according to one of the preceding claims, **characterized in that** the gear wheels (41, 42) are designed as belt wheels, toothed belt wheels or chain wheels, and the traction means (43) is correspondingly designed as a belt, toothed belt or chain.

13. Steering gear according to one of the preceding claims, **characterized in that** a gear wheel (42) is connected to a spindle nut in which a threaded spindle (21) engages which can be displaced in the direction of the gear axis (G).

14. Steering gear according to one of the preceding claims, **characterized in that** the steering gear (1) is designed as a steer-by-wire steering drive.

## Revendications

1. Mécanisme de direction (1) pour un véhicule automobile, comprenant une première roue de transmission (41) pouvant être entraînée en rotation autour d'un axe de moteur (M) par un moteur (31) dans un carter de moteur (3), une deuxième roue de transmission (42) montée en rotation dans un carter de transmission (3) autour d'un axe de transmission (G) disposé parallèlement à l'axe de moteur (M), et un moyen d'entraînement entourant les roues de transmission (41, 42), l'axe du moteur (M) et l'axe de la boîte de vitesses (G) étant espacés l'un de l'autre dans la direction d'une ligne de liaison (V) et un dispositif de précontrainte (5) étant en prise avec le carter du moteur (3) et le carter de la boîte de vitesses (2), lequel est conçu pour repousser les roues de la boîte de vitesses (41, 42) l'une de l'autre dans la direction de la ligne de liaison (V),
le dispositif de précontrainte (5) présentant un élément en forme de coin (51) et un élément de serrage (53), l'élément en forme de coin (51) présentant des surfaces en forme de coin (510, 511) qui coopèrent avec des contre-surfaces correspondantes (520, 521) sur le carter de moteur (3) et sur le carter de transmission (2), et l'élément de serrage (53) est conçu pour forcer l'élément en coin (51) dans la direction du coin entre les contre-surfaces (520, 521),
**caractérisé en ce que**
**en ce que** le carter de moteur (3) est articulé sur le carter de transmission (2) à distance de la ligne de liaison (V).

2. Mécanisme de direction selon la revendication 1, **caractérisé en ce que** l'élément en forme de coin (51) s'engage à distance de la ligne de jonction (V) depuis l'extérieur sur le carter du moteur (3) et le carter de la boîte de vitesses (2).

3. Mécanisme de direction selon l'une des revendications précédentes, **caractérisé en ce que** l'élément en forme de coin (51) est disposé à l'extérieur du moyen de traction (43).

4. Mécanisme de direction selon l'une quelconque des revendications précédentes, **caractérisé en ce que** les contre-surfaces (520, 521) sont formées sur des saillies d'appui (22, 33) faisant saillie extérieurement sur le carter moteur (3) et le carter de transmission (3).

5. Mécanisme de direction selon la revendication 4, **caractérisé en ce que** les saillies d'appui (22, 33) sont formées d'un seul tenant.

6. Mécanisme de direction selon l'une des revendications précédentes, **caractérisé en ce qu'**au moins un élément de serrage (53) est relié au carter moteur (3) ou au carter de transmission (2).

7. Mécanisme de direction selon la revendication 6, **caractérisé en ce que** l'élément de serrage (53) est conçu comme une vis de serrage ou un rivet.

8. Mécanisme de direction selon l'une des revendications précédentes, **caractérisé en ce que** les surfaces de calage (510, 511) de l'élément de calage (51) forment un angle de calage compris entre 5° et 25°.

9. Mécanisme de direction selon l'une des revendications précédentes, **caractérisé en ce qu'**une des surfaces de calage (510, 511) est perpendiculaire à la ligne de jonction (V).

10. Mécanisme de direction selon l'une des revendications précédentes, **caractérisé en ce que** l'élément en forme de coin (51) présente un rebord de coin allongé.

11. Mécanisme de direction selon l'une des revendications précédentes, **caractérisé en ce que** l'élément en forme de coin (51) présente une matière plastique ou un matériau métallique.

12. Mécanisme de direction selon l'une des revendications précédentes, **caractérisé en ce que** les roues du mécanisme (41, 42) sont conçues comme des roues à courroie, des roues à courroie crantée ou des roues à chaîne, et le moyen de traction (43) est conçu de manière correspondante comme une courroie, une courroie crantée ou une chaîne.

13. Mécanisme de direction selon l'une des revendications précédentes, **caractérisé en ce qu'**une roue de mécanisme (42) est reliée à un écrou de broche dans lequel s'engage une broche filetée (21) pouvant être déplacée dans la direction de l'axe de mécanisme (G).

14. Mécanisme de direction selon l'une des revendications précédentes, **caractérisé en ce que** le mécanisme de direction (1) est conçu comme un entraînement de direction Steer-by-Wire.
